# EUROPÄISCHE PATENTANMELDUNG

(11) **EP 3 315 304 A1**
(43) Veröffentlichungstag der Anmeldung: **02.05.2018**
(21) Anmeldenummer: 17001766.9
(22) Anmeldetag: 26.10.2017
(51) Int. Cl.: B32B 17/10, B60J 1/17

(54) **VERBUNDSCHEIBE FÜR EIN KRAFTFAHRZEUG UND KRAFTFAHRZEUG MIT EINER VERBUNDSCHEIBE**

(30) Priorität: 27.10.2016 DE 102016012837
(71) Anmelder: AUDI AG, 85045 Ingolstadt (DE)
(72) Erfinder: Gassmann, Lothar, 74177 Bad Friedrichshall (DE)
(74) Vertreter: Patzelt, Heike Anna Maria

(57) **Zusammenfassung**

Die Erfindung betrifft eine Verbundscheibe (10) für ein Kraftfahrzeug (50), mit wenigstens zwei Scheibenelementen (12, 22) und mit wenigstens zwei Folienelementen (30, 40) mit verschiedenen physikalischen Eigenschaften, welche zwischen den wenigstens zwei Scheibenelementen (12, 22) angeordnet sind, wobei die wenigstens zwei Folienelemente (30, 40) nebeneinander angeordnet und dabei an einer ersten Scheibenfläche (14) und/oder an einer zweiten Scheibenfläche des ersten Scheibenelements (12) und/oder des zweiten Scheibenelements der wenigstens zwei Scheibenelemente (12, 22) in Anlage sind. Ein weiterer Aspekt der Erfindung betrifft ein Kraftfahrzeug (50) mit einer Verbundscheibe (10).

## Beschreibung

Die Erfindung betrifft eine Verbundscheibe für ein Kraftfahrzeug, mit wenigstens zwei Scheibenelementen und mit wenigstens zwei Folienelementen mit verschiedenen physikalischen Eigenschaften, welche zwischen den wenigstens zwei Scheibenelementen angeordnet sind. Ein weiterer Aspekt der Erfindung betrifft ein Kraftfahrzeug mit wenigstens einer Verbundscheibe.

Derartige Verbundscheiben sind in der Kraftfahrzeugtechnik weit verbreitet und dienen insbesondere dem Insassenschutz im Falle eines Unfalls. Während beispielsweise konventionelle Glasscheiben bei einem Bruch zu starker Splitterbildung neigen, werden Verbundscheibe beispielsweise dahingehend ausgelegt und konstruiert, dass bei einer Scheibenbeschädigung eine etwaige Splitterbildung zumindest weitgehend vermieden und dadurch Fahrzeuginsassen beispielsweise vor Schnittwunden geschützt werden können.

Aus der DE 197 57 061 A1 ist eine Fahrzeugseitenscheibe eines Sicherheit-Personen Kraftwagens bekannt. Die Fahrzeugseitenscheibe ist im Bereich ihrer Ränder durch einen Flachprofilrahmen verstärkt. Zur Erhöhung einer Durchbruchsicherheit sind zusätzlich zwei Schichten aus Einscheibensicherheitsglas mit zwei zwischenliegenden Folie vorgesehen. Die Folien erstrecken sich dabei über die gesamte Scheibenfläche.

Die DE 297 24 580 U1 offenbart ein schalldämpfendes Verbundglas. Hierbei ist eine schalldämpfende Folie vorgesehen, welche zwischen zwei thermoplastischen Folien angeordnet und mit diesen und zwei äußeren Glasscheiben unter Anwendung von Wärme und Druck verbunden ist.

Aus der EP 2 548 731 A1 sind hochfeste Folienlaminate, welche aus mindestens drei verschiedenen Schichten aufgebaut sind, bekannt. Die Folien Laminate können zur Herstellung von Glas-Verbünden für Kraftfahrzeuge verwendet werden.

Aufgabe der vorliegenden Erfindung ist es, eine Verbundscheibe sowie ein Kraftfahrzeug der eingangs genannten Art bereitzustellen, welche besonders bedarfsgerecht gestaltet werden können.

Diese Aufgabe wird durch eine Verbundscheibe mit den Merkmalen des Patentanspruchs 1 sowie durch eine Kraftfahrzeug mit den Merkmalen des Patentanspruchs 6 gelöst. Vorteilhafte Weiterbildungen der Erfindung sind durch die Unteransprüche gegeben.

Die Erfindung geht von einer Verbundscheibe für ein Kraftfahrzeug, mit wenigstens zwei Scheibenelementen und mit wenigstens zwei Folienelementen mit verschiedenen physikalischen Eigenschaften, welche zwischen den wenigstens zwei Scheibenelementen angeordnet sind, aus.

Um eine Verbundscheibe der eingangs genannten Art zu schaffen, welche besonders bedarfsgerecht gestaltet werden kann, ist es erfindungsgemäß vorgesehen, dass die wenigstens zwei Folienelemente nebeneinander angeordnet und dabei an einer ersten Scheibenfläche und/oder an einer zweiten Scheibenfläche des ersten Scheibenelements und/oder des zweiten Scheibenelements der wenigstens zwei Scheibenelemente in Anlage sind. Dadurch, dass die wenigstens zwei Folienelemente mit verschiedenen physikalischen Eigenschaften nebeneinander an zumindest einer der Scheibenflächen angeordnet sind, kann die Verbundscheibe auf besonders einfache Art und Weise bedarfsgerecht gestaltet werden. So kann beispielsweise eines der Folienelemente als hochfestes Foliensegment ausgestaltet sein und gezielt im Bereich einer Anbindung (beispielsweise im Bereich einer Haltefläche) an welcher die Verbundscheibe an dem Kraftfahrzeug lagerbar ist, mit einem der Scheibenelemente oder mit beiden Scheibenelementen verbunden, also beispielsweise verklebt sein. Diese hochfeste Folie kann beispielsweise hierzu an einem Randbereich der Verbundscheibe angeordnet sein. Das hochfeste Folienelement kann sich also beispielsweise über eine erste Teilfläche der Scheibenfläche erstreckenden, wobei die erste Teilfläche einem Haltebereich bzw. eine Randbereich der Verbundscheibe zugeordnet sein kann. Durch das Anordnen des hochfesten Folieelements an der ersten Teilfläche (Randbereich) kann die Verbundscheibe beispielsweise über eine Klemmung und/oder über eine oder mehrere Öffnungen in der Scheibe zur Befestigung und Anbindung beispielsweise eines Fensterhebersystems verwendet werden. Die hochfeste Folie verhindert ein etwaiges Splittern und zusätzlich oder alternativ eine Rissbildung im Bereich der ersten Teilfläche (Randbereich) sodass eine hohe Gestaltungsfreiheit bei der Art der Verbindung zwischen der Verbundscheibe und beispielsweise einem Fensterhebersystem besteht. Es ist klar, dass auch mehr als zwei Folienelemente nebeneinander angeordnet und verklebt sein können.

An einer zweiten Teilfläche der Scheibenfläche kann das andere Folienelement der wenigstens zwei Folienelemente angeordnet und mit einem der Scheibenelemente oder mit beiden Scheibenelementen verbunden sein. Ebenso wie das erste Folienelement kann auch das zweite Folienelement der wenigstens zwei Folienelemente beispielsweise durch eine Klebeverbindung mit einem der Scheibenelemente oder mit beiden Scheibenelementen verbunden sein. Bei der zweiten Teilfläche der Scheibenfläche kann es sich um eine Sichtfläche handeln, an welcher eine besonders hohe Steifigkeit weniger wichtig sein kann, als an der ersten Teilfläche. Dementsprechend kann das andere Folienelement, welches an der zweiten Teilfläche angeordnet ist, beispielsweise als UV-Schutzfolie und zusätzlich oder alternativ als Wärmedämmfolie ausgestaltet sein, um nur einige weitere Beispiele zu nennen. Zusammenfassend ist also durch das Anordnen der wenigstens zwei Folienelemente mit verschiedenen physikalischen Eigenschaften nebeneinander an der Scheibenfläche eine besonders bedarfsgerechte Gestaltung der gesamten Verbundscheibe ermöglicht.

In einer vorteilhaften Ausgestaltung der Erfindung ist zumindest eines der wenigstens zwei Folienelemente als Akustikfolienelement und/oder als Farbfolienelement ausgebildet. Dies ist von Vorteil da ein Akustikfolienelement einen besonders wirksamen und einfachen Schallschutz und ein Farbfolienelement beispielsweise einen einfachen und wirksamen Schutz vor intensivem Lichteinfall in einen Fahrzeuginnenraum gewährleisten können. Ein derartiges Farbfolienelement kann beispielsweise eine vorbestimmte Trübung und zusätzlich oder alternativ eine vorbestimmte Tönung aufweisen.

Gemäß einer weiteren vorteilhaften Ausgestaltung der Erfindung umfasst die Verbundscheibe zu deren Lagerung an dem Kraftfahrzeug wenigstens eine Öffnung, wobei sich die wenigstens eine Öffnung durch zumindest eines der Folienelemente und durch die Scheibenfläche erstreckt. Dies ist von Vorteil, da eine derartige Öffnung ein besonders sicheres Halten und Abstützen der Verbundscheibe in mehreren Raumrichtungen ermöglicht. Die Öffnung kann beispielsweise als Durchgangsöffnung durch sämtliche Scheibenelemente und zumindest eines der Folienelemente ausgestaltet sein. Die Öffnung kann jedoch auch als Senköffnung ausgestaltet sein und sich durch eines der Folienelemente sowie durch die Scheibenfläche erstrecken. In dieser Öffnung kann beispielsweise eine Bewegungsvorrichtung - beispielsweise ein Fensterhebersystem - des Kraftfahrzeugs zum Bewegen der Verbundscheibe eingreifen. Die Verbundscheibe kann also im Bereich der Öffnung kraftübertragend mit der Bewegungsvorrichtung gekoppelt sein. Hierzu kann beispielsweise ein Haltestift der Bewegungsvorrichtung in die Öffnung eingreifen, um nur ein Beispiel zu nennen.

Gemäß einer weiteren vorteilhaften Ausgestaltung der Erfindung ist zumindest eines der wenigstens zwei Folienelemente zumindest teilweise aus Polyvinylbutyral (PVB) gebildet. Dies ist von Vorteil, da ein aus Polyvinylbutyral gebildetes Folienelement besonders widerstandsfähig und damit hochfest ist. Damit eignet sich ein aus Polyvinylbutyral gebildetes Folienelement besonders gut zur Verstärkung beziehungsweise Versteifung der Verbundscheibe in einem Bereich, an welchem eine Bewegungsvorrichtung, wie beispielsweise ein Fensterhebersystem des Kraftfahrzeugs angreift.

Gemäß einer weiteren vorteilhaften Ausgestaltung der Erfindung weist zumindest eines der wenigstens zwei Folienelemente eine Foliendicke zwischen 0,5 mm und 2 mm, bevorzugt 0,5 mm bis 1,0 mm und besonders bevorzugt 0,74 mm bis 0,78 mm auf. Dies ist von Vorteil, da Foliendicken in diesem Bereich ausreichend sind, um jeweilige physikalische Eigenschaften der jeweiligen Folienelemente wirksam in deren Einsatz in der Verbundscheibe zur Geltung kommen zu lassen. Gleichzeitig wiegen Folienelemente mit derartigen Foliendicken wenig. Eines der beiden Folienelemente kann als besonders hochfestes DG41-Folienelement mit beispielsweise einer Foliendicke von 0,76 mm ausgebildet sein, um nur ein Beispiel zu nennen.

Ein zweiter Aspekt der Erfindung betrifft eine Kraftfahrzeug mit wenigstens einer Verbundscheibe. Einer derartiges Kraftfahrzeug kann besonders bedarfsgerecht gestaltet werden, da beispielsweise Verbundscheiben mit verschiedenen Lichtdurchlässigkeiten und zusätzlich oder alternativ Schallschutzeigenschaften in dem Kraftfahrzeug eingebaut sein können.

In einer vorteilhaften Ausgestaltung der Erfindung ist die Verbundscheibe bewegbar an dem Kraftfahrzeug gelagert. Dies ist von Vorteil, da die Verbundscheibe somit beispielsweise besonders einfach zwischen einer Offenposition und einer Schließposition bewegbar an dem Kraftfahrzeug aufgenommen sein kann.

In einer weiteren vorteilhaften Ausgestaltung der Erfindung ist die Verbundscheibe als Seitenscheibe oder als Dachscheibe des Kraftfahrzeugs ausgebildet. Dies ist von Vorteil, da bei einer als Seitenscheibe oder als Dachscheibe ausgebildeten Verbundscheibe Folienelemente mit verschiedensten physikalischen Eigenschaften eingesetzt werden können, wohingegen insbesondere bei einer Windschutzscheibe erhöhte Anforderungen an etwaige gesetzliche Vorschriften bestehen. So kann beispielsweise eine Seitenscheibe eine deutlich stärkere Tönung aufweisen, als eine Windschutzscheibe.

Die in Bezug auf die erfindungsgemäße Verbundscheibe vorgestellten bevorzugten Ausführungsformen und deren Vorteile gelten entsprechend für das erfindungsgemäße Kraftfahrzeug und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:

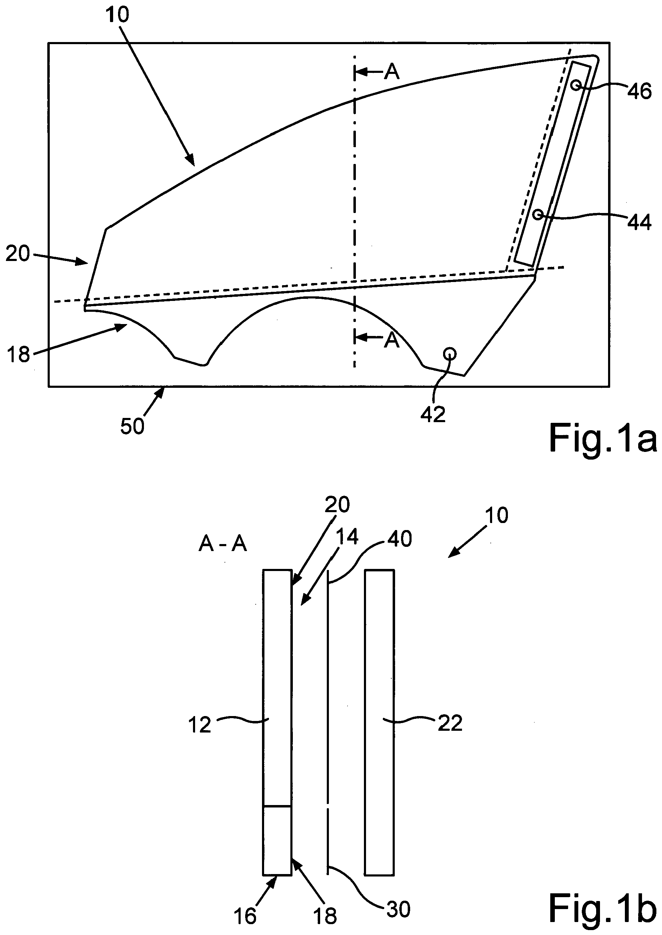

- Fig. 1a: eine Draufsicht auf eine für die Erfindung beispielhafte Ausführungsform einer Verbundscheibe, welche mittels mehrerer Öffnungen in einem Kraftfahrzeug gelagert sein kann; und
- Fig. 1b: eine Schnittansicht der in Fig. 1a dargestellten Verbundscheibe gemäß einer Schnittlinie A-A, wobei einzelne Komponenten der Verbundscheibe durch eine Explosionsdarstellung verdeutlicht sind.

Fig. 1a zeigt eine Verbundscheibe 10, welche in einem hier lediglich schematisch dargestellten Kraftfahrzeug 50 angeordnet ist. Die Verbundscheibe 10 weist mehrere Öffnungen 42, 44, 46 auf, an welchen die Verbundscheibe 10 in dem Kraftfahrzeug 50 gelagert sein kann. So kann beispielsweise an der Öffnung 42 eine hier nicht weiter dargestellte Bewegungsvorrichtung, welche beispielsweise als Fensterhebersystem ausgestaltet sein kann, eingreifen. Die Verbundscheibe 10 kann also bewegbar an dem Kraftfahrzeug 50 gelagert sein. Die Verbundscheibe 10 ist im vorliegenden Ausführungsbeispiel als Seitenscheibe ausgestaltet. Es ist jedoch auch prinzipiell denkbar die Verbundscheibe beispielsweise als Dachscheibe als Windschutzscheibe oder als Heckscheibe des Kraftfahrzeugs 50 auszubilden, wenngleich dies hier nicht explizit gezeigt ist.

Aus der Zusammenschau von Fig. 1a mit Fig. 1b ist erkennbar, dass die Verbundscheibe 10 als Verbundsicherheitsglas (VSG-Glas) mit vorliegend zwei Scheibenelementen 12, 22 ausgestaltet ist. Die beiden Scheibenelemente 12, 22 stellen dabei ein inneres beziehungsweise äußeres Glas der Verbundscheibe 10 dar. Die Verbundscheibe 10 weist des Weiteren vorliegend zwei Folienelemente 30, 40 mit verschiedenen physikalischen Eigenschaften auf. Das Folienelement 30 ist dabei als hochfestes Folienelement ausgestaltet, und zumindest teilweise aus Polyvinylbutyral gebildet. Die beiden Folienelemente 30, 40 weisen vorliegend beide eine gleiche Foliendicke von hier beispielhaft 0,76 mm auf. Das zweite Folienelement 40 kann dabei als Akustikfolienelement und zusätzlich oder alternativ als Farbfolienelement ausgebildet sein. Dementsprechend kann das zweite Folienelement 40 beispielsweise als getönte Schallschutzfolie ausgestaltet sein.

Die beiden Folienelemente 30, 40 weisen also im vorliegenden Ausführungsbeispiel verschiedene physikalische Eigenschaften auf und sind, wie aus Fig. 1b hervorgeht zwischen den wenigstens zwei Scheibenelementen 12, 22 angeordnet. Um eine besonders bedarfsgerechte Gestaltung der Verbundscheibe 10 zu ermöglichen, sind die wenigstens zwei Folienelemente 30, 40 nebeneinander angeordnet und dabei an einer ersten Scheibenfläche 14 des ersten Scheibenelements 12 und zusätzlich oder alternativ an einer zweiten Scheibenfläche des zweiten Scheibenelements 22 der wenigstens zwei Scheibenelemente 12, 22 in Anlage. Die beiden Folienelemente 30, 40 sind im vorliegenden Ausführungsbeispiel jeweils einerseits mit dem ersten Scheibenelement 12 und andererseits mit dem zweiten Scheibenelemente 22 verklebt. Das erste Folienelement 30 kann dabei an einer ersten Teilfläche 18 der Scheibenfläche 14 mit dem ersten Scheibenelement 12 verklebt sein. Das zweite Folienelement 40 kann - wie im vorliegenden Ausführungsbeispiel - an einer zweiten Teilfläche 20 der Scheibenfläche 14 mit dem ersten Scheibenelement 12 verklebt sein. Die erste Teilfläche 18 erstreckt sich dabei entlang eines Haltebereichs der Verbundscheibe 10, an welchem eine Klemmverbindung und zusätzlich oder alternativ eine Schraubverbindung mit anderen Fahrzeugkomponenten, wie beispielsweise der Bewegungsvorrichtung (beispielsweise ein Fensterhebersystem) hergestellt werden kann. In diesem Haltebereich, welcher auch als Befestigungsbereich bezeichnet werden kann, ist im vorliegenden Ausführungsbeispiel mit dem ersten Folienelement 30 eine besonders hochfeste Folie zwischen dem inneren Glas (erstes Scheibenelements 12) und dem äußeren Glas (zweites Scheibenelemente 22) angeordnet. Diese hochfeste Folie gestattet eine besonders bedarfsgerechte und freie Anbindung der Bewegungsvorrichtung beispielsweise an den jeweiligen Öffnungen 42, 44, 46. Die hochfeste Folie (erstes Folienelement 30) kann ein lokales Splittern beziehungsweise Brechen der Verbundscheibe 10 im Bereich der jeweiligen Öffnungen 42, 44, 46 verhindern, sodass auf etwaige Adapter zur Verteilung von Betätigungskräften im Bereich der Öffnungen 42, 44, 46 verzichtet und dadurch Gewicht eingespart werden kann.

Allgemein kann auch eines der Folienelemente 30, 40 beispielsweise die Scheibenfläche 14 seitlich überragen. Des Weitern kann im Allgemeinen eines der Folienelemente 30, 40 an zumindest einer Scheibenkante 16 des ersten Scheibenelements 12 umgeformt und an dieser Scheibenkante 16 mit dem ersten Scheibenelement 12 verbunden sein. Dadurch kann auf einfache Art und Weise eine Bruchsicherheit an dieser Scheibenkante 16 erhöht werden. So kann beispielsweise die Gefahr einer Beschädigung beim Einbau der Verbundscheibe 10 in das Kraftfahrzeug 50 verringert werden.

Zusammenfassend gestattet die erfindungsgemäße Verbundscheibe 10 in jeweiligen Bereichen, an welchen die Verbundscheibe 10, welche als sogenannte Verbundsicherheitsscheibe ausgestaltet sein kann, einen Beschnitt der jeweiligen Folienelemente 30,40 derart auszugestalten, dass beispielsweise mit dem ersten Folienelement 30 eine besonders widerstandsfähig Haltefläche gebildet werden kann und mit dem zweiten Folienelement 40 beispielsweise eine Scheibentönung und zusätzlich oder alternativ eine Schallschutzdämmung erreicht werden kann.

## Patentansprüche

1. Verbundscheibe (10) für ein Kraftfahrzeug (50), mit wenigstens zwei Scheibenelementen (12, 22) und mit wenigstens zwei Folienelementen (30, 40) mit verschiedenen physikalischen Eigenschaften, welche zwischen den wenigstens zwei Scheibenelementen (12, 22) angeordnet sind,
**dadurch gekennzeichnet, dass**
die wenigstens zwei Folienelemente (30, 40) nebeneinander angeordnet und dabei an einer ersten Scheibenfläche (14) und/oder an einer zweiten Scheibenfläche des ersten Scheibenelements (12) und/oder des zweiten Scheibenelements der wenigstens zwei Scheibenelemente (12, 22) in Anlage sind.

2. Verbundscheibe (10) nach Anspruch 1,
**dadurch gekennzeichnet, dass**
zumindest eines der wenigstens zwei Folienelemente (30, 40) als Akustikfolienelement und/oder als Farbfolienelement ausgebildet ist.

3. Verbundscheibe (10) nach Anspruch 1 oder 2,
**dadurch gekennzeichnet, dass**
die Verbundscheibe (10) zu deren Lagerung an dem Kraftfahrzeug (50) wenigstens eine Öffnung (42, 44, 46) umfasst, wobei sich die wenigstens eine Öffnung (42, 44, 46) durch zumindest eines der Folienelemente (30, 40) und durch die Scheibenfläche (14) erstreckt.

4. Verbundscheibe (10) nach einem der vorhergehenden Ansprüche,
**dadurch gekennzeichnet, dass**
zumindest eines der wenigstens zwei Folienelemente (30, 40) zumindest teilweise aus Polyvinylbutyral gebildet ist.

5. Verbundscheibe (10) nach einem der vorhergehenden Ansprüche,
**dadurch gekennzeichnet, dass**
zumindest eines der wenigstens zwei Folienelemente (30, 40) eine Foliendicke zwischen 0,5 mm und 2 mm, bevorzugt 0,5 mm bis 1,0 mm und besonders bevorzugt 0,74 mm bis 0,78 mm aufweist.

6. Kraftfahrzeug (50) mit wenigstens einer Verbundscheibe (10) nach einem der Ansprüche 1 bis 5.

7. Kraftfahrzeug (50) nach Anspruch 6,
**dadurch gekennzeichnet, dass**
die Verbundscheibe (10) bewegbar an dem Kraftfahrzeug (50) gelagert ist.

8. Kraftfahrzeug (50) nach einem der Ansprüche 6 oder 7,
**dadurch gekennzeichnet, dass**
die Verbundscheibe (10) als Seitenscheibe oder als Dachscheibe des Kraftfahrzeugs (50) ausgebildet ist.
